# DEMANDE DE BREVET EUROPEEN

(11) **EP 3 241 612 A1**
(43) Date de publication de la demande: **08.11.2017**
(21) Numéro de dépôt: 17168730.4
(22) Date de dépôt: 28.04.2017
(51) Int. Cl.: B01J 19/00, B08B 3/12, B01J 19/24

(54) **PROCEDE DE NETTOYAGE D'UN CANAL MILLIMETRIQUE D'UN ECHANGEUR-REACTEUR**

(30) Priorité: 03.05.2016 FR 1653995
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: FAURE, Raphael, 78470 Saint Rémy les Chevreuse (FR); JOLY, ROMAIN, 91360 Epinay sur orge (FR)
(74) Mandataire: Laigneau, Amandine

(57) **Abrégé**

Procédé de nettoyage d'un canal millimétrique d'un échangeur-réacteur, avec ledit canal millimétrique recouvert au moins partiellement d'un dépôt de catalyseur, comprenant la génération d'au moins une onde ultrasonore traversant le canal dans une direction d'écoulement d'au moins un fluide de traitement servant de milieu support de l'onde ultrasonore, avec le fluide de traitement soumis aux ultrasons permettant de générer un phénomène de cavitation permettant de décoller de la surface intérieure du canal millimétrique le dépôt de catalyseur.

## Description

La présente invention est relative au procédé de nettoyage des dépôts de catalyseurs de la surface des canaux millimétriques des réacteurs-échangeurs.

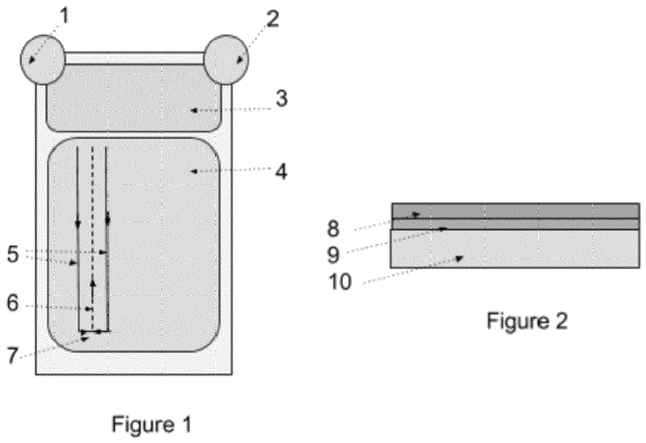

Actuellement le procédé le plus répandu de production de gaz de synthèse est le vaporeformage du méthane. Cette réaction est catalytique et endothermique. La chaleur nécessaire pour la réaction est obtenue par combustion dans un four radiatif. Le gaz de synthèse est donc obtenu à haute température (aux environs de 900°C). Une optimisation déjà largement répandue propose le déroulement de la réaction dans un échangeur-réacteur millistructuré afin d'améliorer les transferts de chaleur et de matière au sein du réacteur.
Le réacteur de reformage dont il est question dans cette invention est un ensemble d'un seul tenant, constitué de différentes parties, représentées par les figures 1 et 2. Par « réacteur d'un seul tenant » on entend un réacteur ne présentant pas d'interface d'assemblage. L'entrée et la sortie 2 de l'échangeur-réacteur sont directement reliées à la zone de distribution 3, qui alimente la zone d'échange 4. La zone d'échange 4 est constituée de canaux droits et parallèles : on distingue parmi ces canaux droits les canaux réactifs 5, les canaux produits 6 et les jonctions 7 entre deux canaux réactifs 5 et un canal produit. Par « canaux réactifs » on entend les canaux où a lieu une réaction catalytique et par « canaux produits » les canaux permettant la circulation du flux produit Seuls l'entrée 1, la zone de distribution 3 et les canaux réactifs 6 sont enduits d'un catalyseur 8. En plus du dépôt de catalyseur 8, ces canaux peuvent être également enduits d'un revêtement protecteur contre la corrosion 9 appliqué à la surface 10 des canaux réactifs.

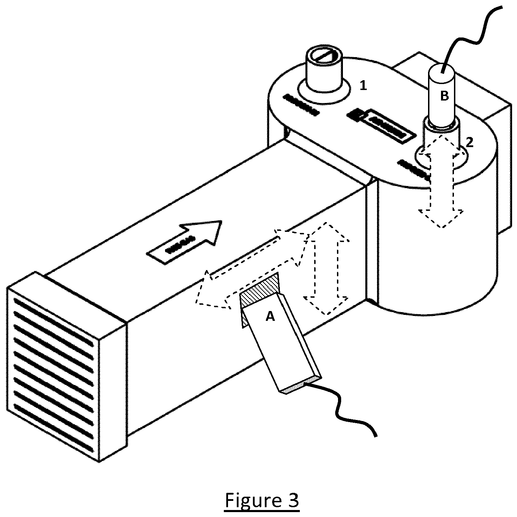

Le réacteur lui-même est représenté figure 3. Le réacteur est un ensemble fermé, dont les canaux réactifs sont uniquement accessibles par l'entrée 1 et la sortie 2. Notons qu'après une utilisation prolongée le ou les catalyseurs compris dans les canaux réactifs 5 sont rendus inactifs et nécessitent d'être changés. Cependant avant d'effectuer un nouveau dépôt de catalyseur dans les canaux millimétriques, il est nécessaire d'enlever le dépôt usagé de catalyseur. On conçoit aisément la difficulté à nettoyer les canaux réactifs 5 du revêtement de catalyseur lorsque celui-ci est usagé.

Partant de là, un problème qui se pose est de fournir un procédé de nettoyage amélioré des canaux millimétriques d'un échangeur-réacteur, c'est-à-dire un nettoyage des dépôts de catalyseurs à la surface intérieure des canaux millimétriques.
Une solution de la présente invention est un procédé de nettoyage d'un canal millimétrique 5 d'un échangeur-réacteur, avec ledit canal millimétrique recouvert au moins partiellement d'un dépôt de catalyseur, comprenant la génération d'au moins une onde ultrasonore traversant le canal dans une direction d'écoulement d'au moins un fluide de traitement servant de milieu support de l'onde ultrasonore, avec le fluide de traitement soumis aux ultrasons permettant de générer un phénomène de cavitation permettant de décoller de la surface intérieure du canal millimétrique le dépôt de catalyseur.
Par « canal millimétrique » on entend un canal de dimension millimétrique.
Notons que l'on pourra appeler « canal millimétrique recouvert au moins partiellement d'un dépôt de catalyseur » « canal réactif ».
L'onde générée par les ultrasons entraine des variations locales de la densité du fluide de traitement. Ces variations de densité sont à l'origine du phénomène de cavitation. La cavitation générée par les ultrasons crée des micro-bulles d'air ou de vapeur d'eau. Lorsque ces bulles se forment au sein du dépôt de catalyseur, elles peuvent en favoriser le décollement lorsque celui-ci adhère faiblement au support, c'est-à-dire à la paroi interne du canal millimétrique.
Selon le cas le procédé selon l'invention peut présenter une ou plusieurs des caractéristiques suivantes, représentée sur la figure 3:
- l'onde ultrasonore est générée au moyen d'un transducteur A plaqué sur la surface extérieure de l'échangeur-réacteur,
- l'onde ultrasonore est générée au moyen d'un transducteur B inséré dans l'entrée 1 ou la sortie 2 de l'échangeur-réacteur.
- le fluide de traitement comprend de l'eau, de préférence de l'eau déminéralisée,
- le fluide de traitement comprend un agent lessiviel de type tensio-actif cationique, comme par exemple des sels de sulfate d'alcool éthoxylé, utilisé seuls ou en combinaison avec une amide oxide de type Lauryl Amidopropyl Dimethyl Amine. La teneur totale massique de l'agent lessiviel dans le fluide de traitement étant comprise entre 0.1 et 1%.
- le fluide de traitement est à une température comprise entre 20°C et 45°C,
- le fluide de traitement présente un débit compris entre 0 et 10L / min
- l'onde ultrasonore présente une fréquence comprise entre20 et 100 kHz,
- l'onde ultrasonore peut être appliquée lorsque le fluide de traitement est en circulation ou stationnaire dans le canal millimétrique,
- ledit procédé comprend successivement :
   a) une étape de remplissage d'au moins un canal millimétrique recouvert au moins partiellement d'un dépôt de catalyseur avec le fluide de traitement,
   b) une étape d'application de l'onde ultrasonore dans le canal millimétrique rempli avec le fluide traitement, et
   c) une étape de rinçage du canal millimétrique au moyen d'un liquide aqueux, de préférence avec de l'eau déminéralisée.
Afin d'évaluer la qualité du nettoyage, il est possible de récupérer les effluents liquides issus du nettoyage des canaux millimétriques et de réaliser un extrait sec. La masse ainsi obtenue est comparée à la masse de catalyseur initialement présente dans le réacteur.
La qualité du nettoyage peut également être observée à l'aide d'un endoscope introduit dans l'entrée 1. Cette observation permet de constater la présence de résidu de catalyseur sur la paroi interne de l'entrée du réacteur-échangeur.
Il est également envisagé de procéder à une mesure des pertes de charges entre l'entrée et la sortie du réacteur. Les valeurs mesurées avant et après nettoyage sont alors comparées aux valeurs mesurées sur le même réacteur avant sa première mise en service, c'est-à-dire avant la première enduction de catalyseur.
Enfin, il est envisagé de quantifier le volume interne du réacteur entre l'entrée et la sortie par un remplissage en eau, assistée d'une mise sous vide pour évacuer les poches d'air résiduelles. Les valeurs mesurées avant et après nettoyage sont comparées aux valeurs mesurées sur le même réacteur avant sa première mise en service, c'est-à-dire avant la première enduction de catalyseur.

L'utilisation des transducteurs A et B est décrit dans les exemples 1 et 2.

### Exemple 1 : procédure de nettoyage par utilisation du transducteur A.

Dans le cas de l'utilisation du transducteur A, le réacteur-échangeur est connecté par son entrée 1 et sa sortie 2 à un réservoir thermostaté contenant un fluide de traitement. Une pompe péristaltique permet la recirculation du fluide de traitement dans le réacteur. La pompe péristaltique peut être positionnée indifféremment entre l'entrée et le réservoir ou entre la sortie et le réservoir. Le fluide de traitement comprend de l'eau déminéralisée, 0.2%m de sels de sulfate d'alcool éthoxylé et 0.2%m amide oxide de type Lauryl Amidopropyl Dimethyl Amine, à une température de 25°C.

La procédure de nettoyage par utilisation du transducteur A est constituée de 5 phases :
- Phase1 : L'onde ultrasonore est d'abord appliquée sur l'ensemble des quatre faces latérales du réacteur-échangeur figure3, par déplacement du transducteur A, pendant qu'une circulation de fluide de traitement est imposée dans le réacteur à raison d'un débit de 2L/min. La durée totale d'application est de 2h, soit d'environ 30 min par face.
- Phase2 : L'opération est répétée à l'identique, en maintenant un débit de circulation nul du fluide de traitement pendant l'application du transducteur A sur chacune des faces. Le fluide de traitement est mis en circulation pendant 5 min, entre chaque application du transducteur sur l'une des faces, pour transporter la matière désolidarisée des canaux réactifs (1) jusqu'au réservoir.
- Phase3 : Le réacteur-échangeur est vidangé et l'ensemble du fluide de traitement est collecté dans le réservoir thermostaté.
- Phase4 : le réacteur-échangeur est rincé trois fois à l'eau déminéralisée. Les eaux de lavages sont collectées dans le réservoir thermostaté.
- Phase5 : Les effluents liquides du bac thermostaté sont évaporés. Le résidu solide obtenu est calciné sous air à 550°C pendant 4h. Le résidu de calcination obtenu est pesé et comparé à la masse de catalyseur initialement présente dans le réacteur.

Si la masse de catalyseur récupérée par nettoyage du réacteur-échangeur représente plus de 90% de la masse initialement présente, le nettoyage est considéré comme correct. Si la masse de catalyseur récupérée est inférieure à 90% de la masse initiale, les phases 1 à 5 ci-dessus peuvent être répétées jusqu'à l'obtention de résultats corrects.

### Exemple 2 : procédure de nettoyage par utilisation du transducteur B.

Dans le cas de l'utilisation du transducteur B, le réacteur-échangeur est positionné à l'horizontale, entrée 1 et sortie 2 orientées vers le haut. Il est ensuite entièrement rempli de fluide de traitement, comprenant de l'eau déminéralisée, 0.2%m de sels de sulfate d'alcool éthoxylé et 0.2%m amide oxide de type Lauryl Amidopropyl Dimethyl Amine, à une température de 25°C. Le transducteur B est alors introduit dans l'entrée 1, et mis en fonctionnement à différentes profondeurs. L'onde est générée pendant une durée d'au moins 5 min. L'opération peut être répétée plusieurs fois, et le réacteur-échangeur peut être vidangé, lavé à l'eau déminéralisé et remplit de nouveau de fluide de traitement entre chaque essai.

La qualité du nettoyage est évaluée ici visuellement à l'aide d'un endoscope introduit dans l'entrée 1 du réacteur-échangeur.

## Revendications

1. Procédé de nettoyage d'un canal millimétrique d'un échangeur-réacteur, avec ledit canal millimétrique recouvert au moins partiellement d'un dépôt de catalyseur, comprenant la génération d'au moins une onde ultrasonore traversant le canal dans une direction d'écoulement d'au moins un fluide de traitement servant de milieu support de l'onde ultrasonore, avec le fluide de traitement soumis aux ultrasons permettant de générer un phénomène de cavitation permettant de décoller de la surface intérieure du canal millimétrique le dépôt de catalyseur.

2. Procédé de nettoyage selon la revendication 1, **caractérisé en ce que** l'onde ultrasonore est générée au moyen d'un transducteur A plaqué sur la surface extérieure de l'échangeur-réacteur.

3. Procédé de nettoyage selon la revendication 1, **caractérisé en ce que** l'onde ultrasonore est générée au moyen d'un transducteur B inséré dans l'entrée 1 ou la sortie 2 de l'échangeur-réacteur.

4. Procédé selon l'une des revendications 1 à 3, **caractérisé en ce que** le fluide de traitement comprend de l'eau.

5. Procédé selon la revendication 4, **caractérisé en ce que** le fluide de traitement comprend un agent lessiviel de type tensio-actif cationique utilisé seul ou en combinaison avec une amide oxide de type Lauryl Amidopropyl Dimethyl Amine.

6. Procédé selon la revendication 5, **caractérisé en ce que** la teneur totale massique de l'agent lessiviel dans le fluide de traitement est comprise entre 0.1 et 1%.

7. Procédé selon l'une des revendications 1 à 6, **caractérisé en ce que** le fluide de traitement est à une température comprise entre 20°C et 45°C.

8. Procédé selon l'une des revendications 1 à 7, **caractérisé en ce que** le fluide de traitement présente un débit compris entre 0 et 10L / min.

9. Procédé selon l'une des revendications 1 à 8, **caractérisé en ce que** l'onde ultrasonore présente une fréquence comprise entre20 et 100 kHz.

10. Procédé selon l'une des revendications 1 à 9, **caractérisé en ce que** l'onde ultrasonore peut être appliquée lorsque le fluide de traitement est en circulation ou stationnaire dans le canal millimétrique.

11. Procédé selon l'une des revendications 1 à 10, **caractérisé en ce que** ledit procédé comprend successivement :
a) une étape de remplissage d'au moins un canal millimétrique recouvert au moins partiellement d'un dépôt de catalyseur avec le fluide de traitement,
b) une étape d'application de l'onde ultrasonore dans le canal millimétrique rempli avec le fluide traitement, et
c) une étape de rinçage du canal millimétrique au moyen d'un liquide aqueux, de préférence avec de l'eau déminéralisée.
